# EUROPÄISCHE PATENTSCHRIFT

(11) **EP 2 916 408 B1**
(45) Veröffentlichungstag und Bekanntmachung des Hinweises auf die Patenterteilung: **09.05.2018**
(21) Anmeldenummer: 15157786.3
(22) Anmeldetag: 05.03.2015
(51) Int. Cl.: H02G 3/04

(54) **Anordnung und Verfahren zum Bilden eines länglichen kanalartigen Aufnahmeraums**
Assembly and method for forming an elongated channel-like receiving area
Agencement et dispositif destinés à former un espace de logement en forme de canal longitudinal

(30) Priorität: 06.03.2014 DE 102014204136
(43) Veröffentlichungstag der Anmeldung: 09.09.2015
(73) Patentinhaber: Zumtobel Lighting GmbH, 6850 Dornbirn (AT)
(72) Erfinder: Ladstätter, Gerald, 6833 Klaus (AT)
(74) Vertreter: Thun, Clemens

(56) Entgegenhaltungen:
- WO-A1-80/02476
- DE-A1- 10 207 827
- GB-A- 2 241 385
- US-A1- 2011 100 678

## Beschreibung

Die vorliegende Erfindung betrifft eine Anordnung, mit deren Hilfe ein länglicher, kanalartiger Aufnahmeraum gebildet werden kann. Der kanalartige Aufnahmeraum kann bspw. als Kabelkanal in einer länglichen Beleuchtungsanordnung oder dergleichen zum Einsatz kommen. Ferner betrifft die Erfindung ein Profilelement sowie ein Verfahren zum Bilden eines länglichen Aufnahmeraums.

Kabelkanäle dienen dazu, ein oder in der Regel mehrere Kabel oder Leitungen geschützt vor äußeren Einflüssen über längere Strecken hinweg führen zu können. Bei abgehängten Deckensystemen z.B. können auf diese Weise Kabel über größere Strecken hinweg verlegt werden um bspw. die an dem Deckensystem befestigten Leuchten mit Strom zu versorgen. Die in dem Kanal aufgenommenen Kabel dienen dabei nicht nur der Stromversorgung sondern können bspw. auch dazu genutzt werden Signale zur Ansteuerung der Leuchten oder zur Übermittlung von Informationen zu übertragen. Dabei ist in der Regel nicht gewünscht, dass die Kabel frei in dem Zwischenraum zwischen der Rohdecke und dem abgehängten Deckensystem verlaufen, sondern stattdessen vor Staub, Feuchtigkeit oder anderen Einflüssen geschützt sind, was durch den Kabelkanal ermöglicht wird. Auch bei sog. Lichtbandsystemen, bei denen an einem länglichen Trägerelement hintereinander Leuchtenmodule angeordnet werden können, können derartige Kabelkanäle zum Einsatz kommen, da sich hier die zur Stromversorgung der Leuchten vorgesehenen Leitungen ebenfalls über die gesamte Länge des Systems, also über eine große Distanz hinweg erstrecken müssen.

Aus dem Stand der Technik sind unterschiedliche Lösungen zum Realisieren derartiger Kabelkanäle bekannt. Üblicherweise wird ein Kanalabschnitt dabei durch zwei miteinander verschnappbare Extrusionsprofile gebildet. Diese Profile werden dem Kunden zur Verfügung gestellt und weisen hierbei bestimmte Standardlängen von einigen Metern auf. Soll der Kanal sich insgesamt über eine größere Länge hinweg erstrecken, so müssen mehrere derartiger Profilelemente stirnseitig aneinandergefügt werden. Auch muss ggf. das letzte Profilteil entsprechend abgeschnitten werden, um die gewünschte Gesamtlänge zu erreichen. Dies ist zwar prinzipiell ohne Weiteres durchführbar, allerdings existieren bei einer derartigen Konstruktion grundsätzlich Übergangsstellen an den Positionen, an denen die Profilteile stirnseitig aneinandergefügt werden. Diese Stoßstellen sind optisch minderwertig und weisen darüber hinaus auch eine geringere Dichtheit gegenüber Staub und Wasser auf. Damit können derartige Kabelkanäle zwar in der Regel problemlos im Zwischenraum abgehängter Deckensysteme eingesetzt werden, da hier das Erscheinungsbild eine untergeordnete Rolle spielt, für andere Einsatzgebiete hingegen, bei denen die Kabelkanäle offenliegen, sind derartige Konstruktionen jedoch weniger gut geeignet.

Darüber hinaus ist auch eine Konstruktion bekannt, bei der ein Kabelkanal durch ein einteiliges, flexibles Profilelement mit einem sehr flachen Querschnitt gebildet wird. Das wiederum im Extrusionsverfahren hergestellte Element weist dabei eine große Flexibilität auf, welche es sogar ermöglicht, das Material aufzurollen. Allerdings ist die Querschnittform derart, dass der Kanal zur Rückseite hin offen ist, was wiederum erfordert, dass dieser dann in spezieller Weise an einem Träger befestigt werden muss. Üblicherweise ist eine verhältnismäßig aufwendige Befestigung mittels länglicher Klebebändern erforderlich, derart, dass die Rückseite des Kanals unmittelbar mit dem Trägerelement verbunden ist und dementsprechend wiederum der Innenraum des Kabelkanals vor Staub oder Feuchtigkeit geschützt ist.

Aus der GB 2 241 385 A ist dann ein Kabelkanal bekannt, der aus zwei gleichen Teilen besteht, welche im nicht verbauten Zustand im wesentlichen flach sind.

Ausgehend von den zuvor beschriebenen Lösungen liegt der vorliegenden Erfindung die Aufgabe zugrunde, eine neuartige Möglichkeit zum Bilden eines länglichen, kanalartigen Aufnahmeraums zu bilden, bei der die Probleme des Standes der Technik vermieden werden.

Die Aufgabe wird durch eine Anordnung zum Bilden eines länglichen, kanalartigen Aufnahmeraums mit den Merkmalen des Anspruchs 1, sowie durch ein Profilelement gemäß Anspruch 9 und ein Verfahren gemäß Anspruch 10 gelöst. Vorteilhafte Weiterbildungen der Erfindung sind Gegenstand der abhängigen Ansprüche.

Die erfindungsgemäße Lösung bringt den Vorteil mit sich, dass nunmehr ein länglicher, kanalartiger Aufnahmeraum geschaffen werden kann, der sich ohne stirnseitige Stoßstellen über seine gesamte Länge hinweg erstreckt und dabei ohne großen Aufwand in nahezu beliebigen Längen realisiert werden kann. Erfindungsgemäß wird dies dadurch erreicht, dass der Kanal wiederum durch zwei längsseitig miteinander zu verbindende Profilteile gebildet wird, welche nunmehr allerdings derart ausgestaltet sind, dass sie jeweils für sich allein genommen aufgerollt werden können. In diesem aufgerollten Zustand können die Profilteile dann in einfacher Weise an den Einsatzort transportiert und dort auf die gewünschte Länge gekürzt bzw. abgeschnitten werden. Damit wird nicht nur der Transport der den Kanal bildenden Elemente erleichtert sondern tatsächlich nunmehr erstmalig die Möglichkeit geschaffen, einen ggf. vollständig geschlossenen Kabelkanal ohne stirnseitige Stoßstellen über eine nahezu beliebige Länge zu realisieren.

Erfindungsgemäß wird dementsprechend eine Anordnung zum Bilden eines länglichen, kanalartigen Aufnahmeraums vorgeschlagen, welche zwei miteinander zu verbindende Profilteile aufweist, die jeweils einen länglichen, plattenartigen Bereich sowie an den beiden Längsseiten des plattenartigen Bereichs ausgebildete Verbindungsbereiche aufweisen. Die Verbindungsbereiche sind dazu ausgebildet, mit den entsprechenden Verbindungsbereichen des anderen Profilteils zusammenzuwirken, um ein längsseitiges Verbinden beider Profilteile miteinander zu ermöglichen. Ferner sind die plattenartigen Bereiche mit den längsseitig angeordneten Verbindungsbereichen jeweils derart ausgebildet, dass jedes der Profilteile für sich allein genommen aufrollbar bzw. aufwickelbar ist. Außerdem ist noch vorgesehen, dass die Verbindungsbereiche zumindest teilweise, vorzugsweise vollständig, aus einem Material erhöhter Flexibilität bestehen und bei zumindest einem der Profilteile der plattenartige Bereich aus einem, im Vergleich zu dem Material erhöhter Flexibilität, Material mit geringerer Flexibilität besteht.

Ferner wird erfindungsgemäß ein Profilteil zur Bildung eines länglichen, kanalartigen Aufnahmeraums, beispielsweise eines Kabelkanals vorgeschlagen, wobei das Profilteil dazu ausgebildet ist, mit einem weiteren Profilteil längsseitig verbunden zu werden, wobei das Profilteil einen länglichen, plattenartigen Bereich sowie an den beiden Längsseiten des plattenartigen Bereichs ausgebildete Verbindungsbereiche aufweist, welche dazu ausgebildet sind, mit den entsprechenden Verbindungsbereichen des anderen Profilteils zusammenzuwirken, und wobei der plattenartige Bereich des Profilteils und die Verbindungsbereiche derart ausgebildet sind, dass das Profilteil wickelbar bzw. aufrollbar ist. Ferner ist noch vorgesehen, dass die Verbindungsbereiche zumindest teilweise, vorzugsweise vollständig, aus einem Material erhöhter Flexibilität bestehen und der plattenartige Bereich aus einem, im Vergleich zu dem Material erhöhter Flexibilität, Material mit geringerer Flexibilität besteht.

Schließlich wird Verfahren zum Bilden eines länglichen, kanalartigen Aufnahmeraums, beispielsweise eines Kabelkanals vorgeschlagen, bei dem zwei Profilteile, welche jeweils einen länglichen, plattenartigen Bereich sowie an den beiden Längsseiten des plattenartigen Bereichs ausgebildete Verbindungsbereiche aufweisen, längsseitig miteinander verbunden werden, wobei die Profilteile jeweils zunächst von eine Rolle abgewickelt und auf die entsprechende Länge des kanalartigen Aufnahmeraums geschnitten werden und anschließend miteinander verbunden werden. Dabei ist noch vorgesehen, dass die Verbindungsbereiche zumindest teilweise, vorzugsweise vollständig, aus einem Material erhöhter Flexibilität bestehen und bei zumindest einem der Profilteile der plattenartige Bereich aus einem, im Vergleich zu dem Material erhöhter Flexibilität, Material mit geringerer Flexibilität besteht.

Die Aufrollbarkeit bzw. Wickelbarkeit der beiden Profilteile der erfindungsgemäßen Anordnung wird unter anderem durch die zumindest in den Verbindungsbereichen jedes Profilteils zumindest teilweise vorgesehene erhöhte Flexibilität des Materials erzielt. Eine derartige Flexibilität ist für das Aufwickeln der Profilteile unerlässlich, wobei demgegenüber die plattenartigen Bereiche, welche im zusammengefügten Zustand der beiden Profilteile zwei einander gegenüberliegende Wände des kanalartigen Aufnahmeraums bilden, durchaus aus einem etwas weniger flexiblen Material bestehen können, wobei bei zumindest einem der Profilteile der plattenartige Bereich aus einem Material mit geringerer Flexibilität besteht. Dieses sollte jedoch zumindest biegeschlaff ausgebildet sein, so dass es zu einer Rolle aufgewickelt werden kann. Die seitlichen Verbindungsbereiche hingegen, welche im zusammengefügten Zustand zwei weiter Seitenwände bzw. seitliche Bereiche des Kanals bilden, bestehen wie bereits erwähnt zumindest teilweise aus einem deutlich flexibleren Material, durch welche einerseits das Aufwickeln nicht behindert und andererseits ein Verklemmen mit den entsprechenden Verbindungsbereichen des anderen Profilteils ermöglicht wird.

Bei einer ersten bevorzugten Ausführungsform der Erfindung ist vorgesehen, dass eines der beiden Profilteile zwei im Querschnitt V-artig ausgeführte seitliche Verbindungsbereiche aufweist. Diese V-artigen Verbindungsbereiche bestehen dabei vorzugsweise vollständig aus dem erwähnten flexiblen Material, während hingegen der plattenartige Bereich aus einem etwas stabileren Material gebildet ist. Das zweite Profilteil ist an seinen Verbindungsbereichen derart profiliert ausgebildet, dass die V-artigen Verbindungsbereiche des ersten Profilteils entsprechend klemmend übergriffen werden, so dass eine stabile, sich über die gesamte Länge des kanalartigen Aufnahmeraums hinweg erstreckende Verbindung erzielt wird. Es hat sich gezeigt, dass bei einer derartigen Ausführungsform nicht nur eine sehr feste und stabile Verbindung zwischen beiden Profilteilen erzielt wird, sondern darüber hinaus auch an den Übergangsstellen eine sehr gute Abdichtung gegenüber äußeren Einflüssen, insb. gegenüber Staub oder Feuchtigkeit erzielt wird.

Die Profilteile der erfindungsgemäßen Anordnung werden dabei vorzugsweise im Extrusionsverfahren hergestellt, wobei wie bereits erwähnt ggf. zwei unterschiedlich flexible Materialien zum Einsatz kommen können. Da derartige Herstellungsverfahren gut beherrschbar sind, können die Profilteile kostengünstig und in hoher Qualität erstellt werden.

Nachfolgend soll die Erfindung anhand der beiliegenden Zeichnung näher erläutert werden. Es zeigen:
Figur 1 eine Ansicht eines mit Hilfe der erfindungsgemäßen Anordnung realisierten Kabelkanals;
Figur 2 die Schnittdarstellung eines ersten Ausführungsbeispiels der erfindungsgemäßen Anordnung zur Bildung des in Figur 1 dargestellten Kabelkanals;
Figur 3 eine Schnittdarstellung eines zweiten Ausführungsbeispiels einer erfindungsgemäßen Anordnung zur Bildung eines kanalartigen Aufnahmeraums und
Figur 4 ein gemäß der vorliegenden Erfindung aufgewickeltes Profilteil, mit dessen Hilfe ein länglicher, kanalartiger Aufnahmeraums gebildet werden soll.

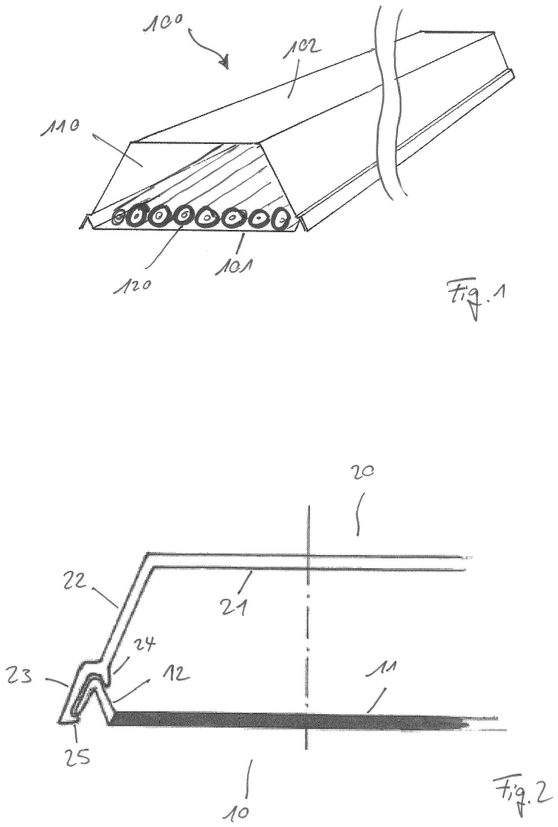

Figur 1 zeigt zunächst in perspektivischer Ansicht einen länglichen, allgemein mit dem Bezugszeichen 100 versehenen Kabelkanal, in dessen Innenraum 110 mehrere Kabel 120 in Längsrichtung verlegt sind. Der dargestellte Kabelkanal 100 kann bspw. im Bereich abgehängter Deckensysteme verlegt werden, wobei er sich über eine größere Länge hinweg erstreckt und dabei einen vorzugsweise allseitig umschlossenen Aufnahmebereich 110 bildet, in dem die Kabel 120 vollständig vor äußeren Einflüssen, insb. jedoch vor Staub und/oder Feuchtigkeit geschützt sind. Mittels nicht näher dargestellter Befestigungselemente könnte der Kabelkanal 100 bspw. an der Rohdecke des Raums befestigt werden. In gleicher Weise wäre allerdings auch denkbar, ihn auf geeigneten Trägerelementen aufliegend anzuordnen.

Der Kabelkanal 100 wird dabei gemäß der vorliegenden Erfindung durch zwei längsseitig miteinander zu verbindende, später noch näher beschriebene Profilteile gebildet, wobei eine Besonderheit der Erfindung darin besteht, dass sich beide Profilteile einstückig über die gesamte Länge des Kanals 100 hinweg erstrecken können und zwar unabhängig von der Länge des Kanals 100. Im Vergleich zu bislang bekannten Lösungen, bei denen Profilteile mit vorgegebenen Standardlängen zur Verfügung standen, die dann hintereinander, also stirnseitig miteinander verbunden werden mussten, liegen bei der erfindungsgemäßen Ausführungsform also keine derartigen Stoßstellen vor. Hierdurch wird nicht nur das Erscheinungsbild des Kabelkanals 100 verbessert sondern auch der Schutz vor Staub und/oder Feuchtigkeit optimiert. Dies wiederum vergrößert die Einsatzmöglichkeiten für den erfindungsgemäßen Kabelkanal 100, so dass dieser bspw. nunmehr auch problemlos für Beobachter sichtbar verlegt werden kann.

Wie bereits erwähnt, zeichnet sich die erfindungsgemäße Anordnung zur Bildung des Kabelkanals 100 dadurch aus, dass sie zwei miteinander zu verbindende Profilteile aufweist. Eine erste Möglichkeit zur Realisierung der Profilteile ist dabei in Figur 2 gezeigt.

Jedes der Profilteile 10 bzw. 20 weist dabei zunächst einen länglichen, plattenartigen Bereich 11 bzw. 21 auf. Beide plattenartigen Bereiche 11 bzw. 21 bilden dabei im zusammengefügten Zustand der Profilteile 10, 20 die zwei einander gegenüberliegenden Unter- und Oberseiten 101, 102 des im Querschnitt trapezförmigen Kanals 100 und sind an ihren Längsseiten jeweils miteinander verbunden. Bei dem Ausführungsbeispiel von Figur 2 ist hierbei zunächst vorgesehen, dass das erste bzw. untere Profilteil 10 an den beiden Längsseiten des plattenartigen Teils 11 V-förmige Verbindungsbereiche 12 aufweist. Diese Verbindungsbereiche 12 bestehen dabei vorzugsweise aus einem flexiblen Material z.B. einem thermoplastischen Elastomer, durch welches nicht nur das formschlüssige Verbinden mit den später noch näher beschriebenen Verbindungsbereichen des zweiten Profilteils 20 optimiert wird, sondern auch ermöglicht wird, dass das Profilteil 10 aufrollbar bzw. aufwickelbar ist.

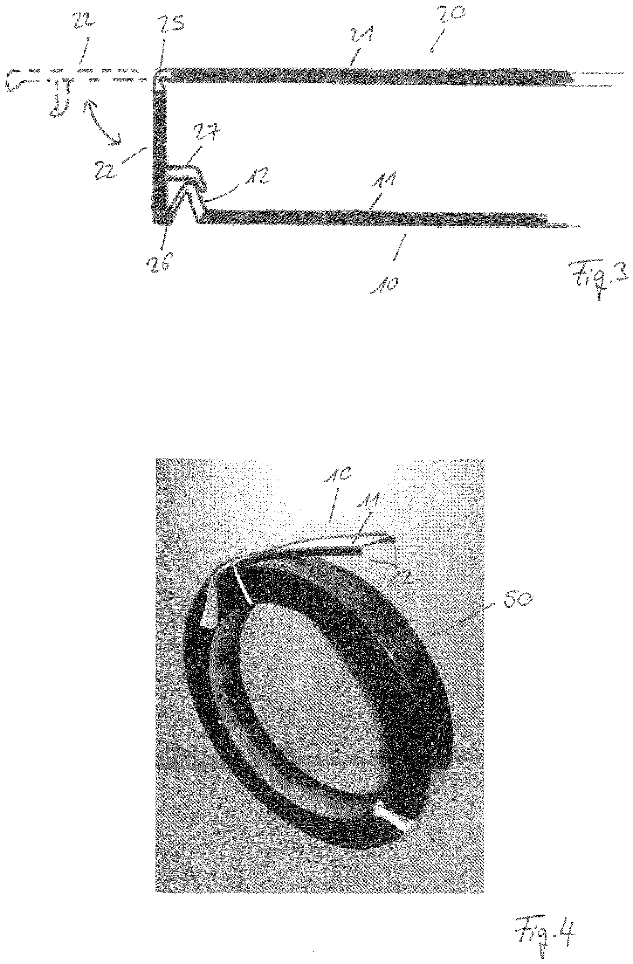

In Figur 4 ist hierbei eine Rolle 50 gezeigt, die durch aufrollen bzw. aufwickeln dieses ersten Profilteils 10 gebildet wurde. Die V-förmigen Verbindungsbereiche 12 sind hierbei quer zur Oberfläche der plattenartigen Teile 11 ausgerichtet und stellen dementsprechend naturgemäß einen größeren Widerstand für das Aufrollen des Profilteils 10 dar. Aufgrund ihrer erhöhten Flexibilität jedoch wird trotz allem die Möglichkeit eröffnet, das Profilteil 10 zu der in Figur dargestellten Rolle 50 aufzuwickeln. Dabei kann durchaus vorgesehen sein, dass das plattenartige Teil 11 im Vergleich zu den Befestigungsbereichen 12 eine geringere Flexibilität aufweist. Es ist jedoch zumindest biegeschlaff ausgeführt und kann dementsprechend aufgrund der Tatsache, dass es selbst eben ausgebildet ist, aufgewickelt werden. Als Material für das plattenartige Teil wäre z.B. ein Kunststoff wie PMMA oder PC denkbar. Dabei muss das plattenartige Teil 11 nicht vollständig eben bzw. plan ausgeführt sein. Ggf. wäre auch denkbar, dass dieses plattenartige Teil 11 leicht gewölbt oder anders profiliert ausgeführt ist, sofern es nach wie vor in der vorgesehenen Weise aufgerollt werden kann.

Das in Figur 2 dargestellte Profilteil 10 wird vorzugsweise im Extrusionsverfahren, insb. in einem Zwei-Komponenten-Extrusionsverfahren hergestellt. Hierdurch kann es nahezu endlos erstellt und dann zu der in Figur 4 dargestellten Rolle 50 aufgewickelt werden. In dieser Konfiguration kann dann das Profilteil 10 an den Einsatzort transportiert und dort auf die gewünschte Länge abgeschnitten werden. Hierdurch wird sehr einfach die Möglichkeit eröffnet, das Profilteil 10 letztendlich in einer nahezu beliebigen Länge einstückig nutzen zu können.

Das zweite Profilteil 20 ist derart ausgestaltet, dass es in entsprechender Weise mit dem ersten Profilteil 10, insb. mit dessen Verbindungsbereichen 12 gekoppelt werden kann. Zu beiden Seiten des länglichen, plattenförmigen Abschnitts 21 sind hierbei seitliche Arme bzw. Flügel 22 ausgebildet, die an ihren Endbereichen einen etwa C-förmigen Koppelabschnitt 23 aufweisen. Dieser weist dabei zunächst einen ersten Steg 24 auf, der den oberen Endbereich des V-förmigen Verbindungsbereichs 12 des ersten Profilteils 10 übergreift. Gleichzeitig ist ein zweiter im Endbereich vorgesehener Steg 25 ausgebildet, der das untere Ende des äußeren V-Abschnitts 12 übergreift. Die Seitenarme 22 mit den C-förmigen Koppelabschnitten 23 sind dabei wiederum aus einem Material größerer Flexibilität gebildet, um einerseits eine gute Verbindung zu dem ersten Profilteil 10 zu erzielen und andererseits das Aufwickeln auch des zweiten Profilteils 20 zu ermöglichen. Im dargestellten Ausführungsbeispiel ist sogar vorgesehen, dass auch der plattenartige Bereich 21 aus einem Material größerer Flexibilität besteht, im vorliegenden Fall also das zweite Profilteil 20 vollständig aus dem Material größerer Flexibilität gebildet ist, wobei es selbstverständlich möglich wäre, dass der plattenartige Bereich 21 wiederum biegeschlaff ausgeführt ist. Wiederum wird das zweite Profilteil 20 vorzugsweise im Extrusionsverfahren endlos hergestellt und dann zu einer vergleichbaren Rolle aufgewickelt, so dass es in gleicher Weise wie das erste Profilteil 10 an den Einsatzort transportiert werden kann.

Ein zweites Ausführungsbeispiel einer erfindungsgemäßen Anordnung ist im Schnitt in Figur 3 dargestellt, wobei zunächst das erste Profilteil 10 identisch zu dem ersten Profilteil 10 des Ausführungsbeispiels gemäß Figur 2 ausgebildet ist.

Das zweite Profilteil 20 hingegen unterscheidet sich nunmehr von dem Profilteil gemäß Figur 2. Dabei ist zunächst vorgesehen, dass der längliche plattenartige Bereich 21, der nunmehr wiederum aus einem Material geringerer Flexibilität, das allerdings nach wie vor biegeschlaff ist, ausgeführt ist, über einen flexiblen Übergangsbereich 25 jeweils mit einem Seitenarm 22 verbunden ist. Der Seitenarm 22 besteht nun ebenfalls überwiegend aus einem Material geringeren Flexibilität, ist allerdings wiederum derart ausgeführt, dass ein zuverlässiges Koppeln mit dem V-förmigen Verbindungsbereichen 12 erzielt wird. Hierzu ist am Endbereich des Seitenarms 22 ein Steg 26 vorgesehen, der den äußeren V-Flügel des Verbindungsbereichs 12 übergreift. Darüber hinaus ist ein nunmehr aus einem flexiblen Material gebildeter weiterer Steg 27 vorgesehen, der den oberen Bereich des V-förmigen Abschnitts 12 übergreift. Auch in diesem Fall wird ein zuverlässiges Verklemmen zwischen den beiden Profilteilen 10 und 20 erzielt, so dass eine gute mechanische Verbindung sowie eine staub- und feuchtigkeitsgeschützte Abdichtung erzielt werden.

Da nunmehr im Endzustand der Anordnung die Seitenarme 22 im Wesentlichen senkrecht zu dem plattenförmigen Teil 21 ausgerichtet sind, wäre in dieser Konstellation ein Aufwickeln des zweiten Profilteils 20 nicht möglich. Dadurch allerdings, dass der Übergang zwischen dem plattenförmigen Teil 21 und dem Seitenarm 22 durch den flexibleren Verbindungsabschnitt 25 gebildet wird, besteht die Möglichkeit, in einem Ausgangszustand die beiden Seitenarme 22 - wie gestrichelt dargestellt - parallel zur Ebene des plattenförmigen Bereichs 21 auszurichten. In dieser Konfiguration besteht wiederum die Möglichkeit, das zweite Profilteil 20 aufzurollen bzw. aufzuwickeln, so dass wiederum in der zuvor beschriebenen Weise auch das zweite Profilteil 20 bequem in großer Länge an den Einsatzort transportiert und dort auf die gewünschte Länge abgeschnitten werden kann. Bei dieser Ausführungsform besteht also ebenso wie das erste Profilteil 10 auch das zweite Profilteil 20 aus unterschiedlich flexiblen Materialien und wird dementsprechend bevorzugt wiederum in Zwei-Komponenten-Extrusionsverfahren hergestellt.

Es ist klar erkennbar, dass mit Hilfe der erfindungsgemäßen Lösung nunmehr geschlossene, kanalartige Bereiche in nahezu beliebiger Länge und trotz allem einfach und kostengünstig erstellt werden können. Die letztendlich realisierbaren Kanäle zeichnen sich dabei nicht nur durch ihr verbessertes Erscheinungsbild sondern insb. auch durch die verbesserte Abdichtung gegenüber äußeren Einflüssen aus. Selbstverständlich wäre es allerdings auch denkbar, in die Profilteile ggf. abschnittweise Öffnungen einzubringen, welche das Einführen bzw. Herausführen von Kabeln oder anderen Leitungen ermöglichen oder mit deren Hilfe ein Befestigen der kanalartigen Konstruktion an einem Träger ermöglicht wird.

Darüber hinaus wäre es selbstverständlich auch denkbar, die Verbindungsbereiche der beiden Profilteile anderweitig zu gestalten, sofern nach wie vor ein entsprechendes Koppeln beider Profilteile ermöglicht und ferner auch das Aufrollen bzw. Aufwickeln der Profilteile nicht behindert wird. Denkbar wäre dabei insb. auch, dass die Profilteile identisch ausgebildet sind, was letztendlich bedeutet, dass lediglich ein einziges Profilteil hergestellt und aufgerollt werden muss. Dieses wird dann zweimal auf die entsprechend gewünschte Länge abgeschnitten und dann miteinander zu dem Kanal verbunden. Hierdurch wird eine besonders einfache und elegante Möglichkeit zum Realisieren eines Kabelkanals geschaffen wobei selbstverständlich die erfindungsgemäße gebildete Kanalkonstruktion auch anderen Zwecken dienen kann.

## Patentansprüche

1. Anordnung zum Bilden eines länglichen, kanalartigen Aufnahmeraums (110), beispielsweise eines Kabelkanals, aufweisend
zwei miteinander zu verbindende Profilteile (10, 20), welche jeweils einen länglichen, plattenartigen Bereich (11, 21) sowie an den beiden Längsseiten des plattenartigen Bereichs (11, 21) ausgebildete Verbindungsbereiche (12, 22) aufweisen, welche dazu ausgebildet sind, mit den entsprechenden Verbindungsbereichen (12, 22) des anderen Profilteils (10, 20) zusammenzuwirken,
wobei die plattenartigen Bereiche (11, 21) der Profilteile (10, 20) und die Verbindungsbereiche (12, 22) derart ausgebildet sind, dass jedes der Profilteile (10, 20) für sich wickelbar bzw. aufrollbar ist,
**dadurch gekennzeichnet,**
**dass** die Verbindungsbereiche (12, 22) zumindest teilweise, vorzugsweise vollständig, aus einem Material erhöhter Flexibilität bestehen und bei zumindest einem der Profilteile der plattenartige Bereich (11, 21) aus einem, im Vergleich zu dem Material erhöhter Flexibilität, Material mit geringerer Flexibilität besteht.

2. Anordnung nach Anspruch 1,
**dadurch gekennzeichnet,**
**dass** das Material mit geringerer Flexibilität zumindest biegeschlaff ausgeführt ist.

3. Anordnung nach Anspruch 1 oder 2,
**dadurch gekennzeichnet,**
**dass** die Verbindungsbereiche (12, 22) der beiden Profilteile (10, 20) im zusammengefügten Zustand zwei einander gegenüberliegende Seitenwände bzw. Seitenbereiche des kanalartigen Aufnahmeraums (110) bilden.

4. Anordnung nach einem der vorherigen Ansprüche,
**dadurch gekennzeichnet,**
**dass** die Verbindungsbereiche (12, 22) der beiden Profilteile (10, 20) ein gegenseitiges Verklemmen ermöglichen.

5. Anordnung nach einem der vorherigen Ansprüche,
**dadurch gekennzeichnet,**
**dass** die Verbindungsbereiche (12, 22) zumindest eines Profilteils (10, 20) derart ausgebildet sind, dass sie in einem Zustand, in dem die beiden Profilteile (10, 20) nicht miteinander verbunden sind, derart ausgelenkt werden können, dass sie in etwa in der Ebene des zugehörigen plattenartigen Teils (11, 21) des Profilteils (10, 20) verlaufen.

6. Anordnung nach einem der vorherigen Ansprüche,
**dadurch gekennzeichnet,**
**dass** bei dem Profilteil, dessen plattenartiger Bereich (11, 21) nicht aus einem Material mit geringerer Flexibilität besteht, der plattenartige Bereich (11, 21) aus einem Material erhöhter Flexibilität besteht oder zumindest biegeschlaff ausgeführt ist.

7. Anordnung nach einem der vorherigen Ansprüche,
**dadurch gekennzeichnet,**
**dass** es sich bei dem Material erhöhter Flexibilität um ein thermoplastisches Elastomer handelt.

8. Anordnung nach einem der vorherigen Ansprüche,
**dadurch gekennzeichnet,**
**dass** die beiden Profilteile (10, 20) identisch ausgebildet sind.

9. Profilteil (10, 20) zur Bildung eines länglichen, kanalartigen Aufnahmeraums (110), beispielsweise eines Kabelkanals,
wobei das Profilteil (10, 20) dazu ausgebildet ist, mit einem weiteren Profilteil (10, 20) längsseitig verbunden zu werden,
wobei das Profilteil (10, 20) einen länglichen, plattenartigen Bereich (11,21) sowie an den beiden Längsseiten des plattenartigen Bereichs (11, 21) ausgebildete Verbindungsbereiche (12, 22) aufweist, welche dazu ausgebildet sind, mit den entsprechenden Verbindungsbereichen (12, 22) des anderen Profilteils (10, 20) zusammenzuwirken,
und wobei der plattenartige Bereich (11, 21) des Profilteils (10, 20) und die Verbindungsbereiche derart ausgebildet sind, dass das Profilteil (10, 20) wickelbar bzw. aufrollbar ist,
**dadurch gekennzeichnet,**
**dass** die Verbindungsbereiche (12, 22) zumindest teilweise, vorzugsweise vollständig, aus einem Material erhöhter Flexibilität bestehen und der plattenartige Bereich (11,21) aus einem, im Vergleich zu dem Material erhöhter Flexibilität, Material mit geringerer Flexibilität besteht.

10. Verfahren zum Bilden eines länglichen, kanalartigen Aufnahmeraums (110), beispielsweise eines Kabelkanals,
bei dem zwei Profilteile (10, 20), welche jeweils einen länglichen, plattenartigen Bereich (11,21) sowie an den beiden Längsseiten des plattenartigen Bereichs (11, 21) ausgebildete Verbindungsbereiche (12, 22) aufweisen, längsseitig miteinander verbunden werden,
wobei die Profilteile (10, 20) jeweils zunächst von eine Rolle (50) abgewickelt und auf die entsprechende Länge des kanalartigen Aufnahmeraums (110) geschnitten werden und anschließend miteinander verbunden werden,
**dadurch gekennzeichnet,**
**dass** die Verbindungsbereiche (12, 22) zumindest teilweise, vorzugsweise vollständig, aus einem Material erhöhter Flexibilität bestehen und bei zumindest einem der Profilteile der plattenartige Bereich (11,21) aus einem, im Vergleich zu dem Material erhöhter Flexibilität, Material mit geringerer Flexibilität besteht.

## Claims

1. Arrangement for forming an elongated, channel-like receiving space (110), for example a cable duct, comprising
- two profile parts (10, 20) to be connected to one another, wherein each has an elongated plate-like region (11, 21) with connecting regions (12, 22) formed on the two longitudinal sides of the plate-like region (11, 21), and which are adapted to interact with the corresponding connecting regions (12, 22) of the other profile part (10, 20),
wherein the plate-like regions (11, 21) of the profile parts (10, 20) and the connecting regions (12, 22) are so designed that each of the profile parts (10, 20) may be wound or rolled up separately,
**characterized in that**
the connecting regions (12, 22) consist at least partially, preferably completely, of a material of increased flexibility, while the plate-like region (11, 21) in the case of at least one of the profile parts consists of a material of reduced flexibility compared to the material of increased flexibility.

2. Arrangement according to claim 1,
**characterized in that**
the material with reduced flexibility is designed to be at least pliable.

3. Arrangement according to claim 1 or 2,
**characterized in that**
in the assembled state, the connecting regions (12, 22) of the two profile parts (10, 20) form two mutually opposite side walls or side regions of the channel-like receiving space (110).

4. Arrangement according to one of the preceding claims,
**characterized in that**
the connecting regions (12, 22) of the profile parts (10, 20) allow mutual jamming.

5. Arrangement according to one of the preceding claims,
**characterized in that**
the connection regions (12, 22) of at least one profile part (10, 20) are so designed that when the two profile parts (10, 20) are not connected to one another, they may be deflected so that they extend approximately in the plane of the associated plate-like region (11, 21) of the profile part (10, 20).

6. Arrangement according to one of the preceding claims,
**characterized in that**
in the profile part whose plate-like region (11, 21) is not made of a material with reduced flexibility, the plate-like region (11, 21) consists of a material of increased flexibility, or is at least designed to be pliable.

7. Arrangement according to one of the preceding claims,
**characterized in that**
the material of increased flexibility is a thermoplastic elastomer.

8. Arrangement according to one of the preceding claims,
**characterized in that**
the two profile parts (10, 20) are identically formed.

9. Profile part (10, 20) for forming an elongated, channel-like receiving space (110), for example a cable duct,
wherein the profile part (10, 20) is designed to be connected longitudinally with a further profile part (10, 20),
wherein the profile part (10, 20) has an elongated, plate-like region (11, 21) as well as connecting regions (12, 22) formed on both longitudinal sides of the plate-like region (11, 21), and which are designed to interact with the corresponding connection regions (12,22) of the other profile part (10, 20), and
wherein the plate-like region (11, 21) of the profile part (10, 20) and the connecting region are so designed that the profile part (10, 20) may be wound or rolled up,
**characterized in that**
the connecting regions (12, 22) consist at least partially, preferably completely, of a material of increased flexibility, while the plate-like region (11, 21) consists of a material of reduced flexibility compared to the material of increased flexibility.

10. Method for forming an elongated, channel-like receiving space (110), for example a cable duct,
wherein two profile parts (10, 20), which respectively have an elongated, plate-like region (11, 21) as well as connecting regions (12, 22) formed on the two longitudinal sides of the plate-like region (11, 21), are connected together on the longitudinal side,
wherein the profile parts (10, 20) are each first unwound from a spool (50) and cut to the appropriate length of the channel-like receiving space (110), and then connected to each other,
**characterized in that**
the connecting regions (12, 22) consist at least partially, preferably completely, of a material of increased flexibility, and wherein in the case of at least one of the profile parts, the plate-like region (11, 21) consists of a material of reduced flexibility compared to the material of increased flexibility.

## Revendications

1. Dispositif pour la formation d'un espace de logement allongé en forme de canal (110), par exemple d'une goulotte de câble, comprenant
deux pièces profilées (10, 20) à relier entre elles, qui présentent chacune une zone allongée en forme de plaque (11, 21), ainsi que des zones de liaison (12, 22) réalisées au niveau des deux côtés longitudinaux de la zone en forme de plaque (11, 21), qui sont conçues pour interagir avec les zones de liaison (12, 22) de l'autre pièce profilée (10, 20),
les zones en forme de plaques (11, 21) des pièces profilées (10, 20) et les zones de liaison (12, 22) étant conçues de façon à ce que chacune des pièces profilées (10, 20) puisse être enroulée sur elle-même,
**caractérisé en ce que**
les zones de liaison (12, 22) sont constituées au moins partiellement, de préférence entièrement, d'un matériau d'une flexibilité augmentée et, dans le cas d'au moins une des pièces profilées, la zone en forme de plaque (11, 21) est constituée d'un matériau de flexibilité plus faible par rapport au matériau de flexibilité augmentée.

2. Dispositif selon la revendication 1,
**caractérisé en ce que**
le matériau à flexibilité plus faible est réalisé au moins de manière souple.

3. Dispositif selon la revendication 1 ou 2,
**caractérisé en ce que**
les zones de liaison (12, 22) des deux pièces profilées (10, 20) forment, dans l'état assemblé, deux parois latérales ou zones latérales opposées entre elles de l'espace de logement en forme de canal (110).

4. Dispositif selon l'une des revendications précédentes,
**caractérisé en ce que**
les zones de liaison (12, 22) des deux pièces profilées (10, 20) permettent un serrage mutuel.

5. Dispositif selon l'une des revendications précédentes,
**caractérisé en ce que**
les zones de liaison (12, 22) d'au moins une pièce profilée (10, 20) sont conçues de façon à ce qu'elles puissent être déviées, dans un état, dans lequel les deux pièces profilées (10, 20) ne sont pas reliées entre elles, de façon à ce qu'elles s'étendent dans le plan de la pièce en forme de plaque (11, 21) correspondante de la pièce profilée (10, 20).

6. Dispositif selon l'une des revendications précédentes,
**caractérisé en ce que**
dans le cas de la pièce profilée, dont la zone en forme de plaque (11, 21) n'est pas constituée d'un matériau à flexibilité plus faible, la zone en forme de plaque (11, 21) est constituée d'un matériau à flexibilité augmentée ou est réalisé au moins de manière souple.

7. Dispositif selon l'une des revendications précédentes,
**caractérisé en ce que**
le matériau à flexibilité augmentée est un élastomère thermoplastique.

8. Dispositif selon l'une des revendications précédentes,
**caractérisé en ce que**
les deux pièces profilées (10, 20) sont conçues de manière identique.

9. Pièce profilée (10, 20) pour la formation d'un espace de logement allongé en forme de canal (110), par exemple d'une goulotte de câble,
la pièce profilée (10, 20) étant conçue de façon à être reliée avec une autre pièce profilée (10, 20) sur le côté longitudinal,
la pièce profilée (10, 20) comprenant une zone allongée en forme de plaque (11, 21) ainsi que des zones de liaison (12, 22) réalisées au niveau des deux côtés longitudinaux de la zone en forme de plaque (11, 21), qui sont conçues pour interagir avec les zones de liaison (12, 22) correspondantes de l'autre pièce profilée (10, 20),
et la zone en forme de plaque (11, 21) de la pièce profilée (10, 20) et les zones de liaison étant conçues de façon à ce que la pièce profilée (10, 20) puisse être enroulée,
**caractérisée en ce que**
les zones de liaison (12, 22) sont constituées, au moins partiellement, de préférence entièrement, d'un matériau à flexibilité augmentée et la zone en forme de plaque (11, 21) est constituée d'un matériau à flexibilité plus faible par rapport au matériau à flexibilité augmentée.

10. Procédé de formation d'un espace de logement allongé en forme de canal (110), par exemple d'une goulotte de câble,
dans lequel deux pièces profilées (10, 20), qui comprennent chacune une zone allongée en forme de plaque (11, 21) ainsi que des zones de liaison (12, 22) réalisées au niveau des deux côtés longitudinaux de la zone en forme de plaque (11, 21), sont reliées entre elles au niveau de leurs côtés longitudinaux,
les pièces profilées (10, 20) étant chacune d'abord déroulée d'un rouleau (50) et découpée à la longueur correspondante de l'espace de logement en forme de canal (110) puis reliées ensemble,
**caractérisé en ce que**
les zones de liaison (12, 22) sont constituées, au moins partiellement, de préférence entièrement, d'un matériau à flexibilité augmentée et, dans le cas d'au moins une des pièces profilées, la zone en forme de plaque (11, 21) est constituée d'un matériau à flexibilité plus faible par rapport au matériau à flexibilité augmentée.
